# EUROPÄISCHE PATENTSCHRIFT

(11) **EP 2 015 868 B1**
(45) Veröffentlichungstag und Bekanntmachung des Hinweises auf die Patenterteilung: **26.01.2011**
(21) Anmeldenummer: 07724948.0
(22) Anmeldetag: 07.05.2007
(51) Int. Cl.: B01L 3/00

(54) **FLÜSSIGKEITSBEHÄLTER MIT ENTNAHMEKAMIN**
LIQUID CONTAINER WITH EXTRACTION CHIMNEY
RECIPIENT DE LIQUIDE AVEC UNE CHEMINEE D'EVACUATION

(30) Priorität: 08.05.2006 DE 102006021404
(43) Veröffentlichungstag der Anmeldung: 21.01.2009
(73) Patentinhaber: F.Hoffmann-La Roche AG, 4070 Basel (CH); Roche Diagnostics GmbH, 68305 Mannheim (DE)
(72) Erfinder: SATTLER, Stephan, 82319 Starnberg (DE)
(74) Vertreter: Tiesmeyer, Johannes
(86) Internationale Anmeldenummer: PCT/EP2007/004024
(87) Internationale Veröffentlichungsnummer: WO 2007/128556

(56) Entgegenhaltungen:
- EP-A- 1 346 773
- WO-A-97/12677
- US-A- 3 512 940
- US-A- 4 522 713
- US-A- 4 602 995
- US-A- 4 683 058
- US-A1- 2004 157 245
- US-B1- 6 221 655

## Beschreibung

Die Erfindung betrifft einen Flüssigkeitsbehälter mit einer oberen Öffnung und mit einem in Flucht mit der oberen Öffnung in den Behälter hineinreichenden, rohrartigen Entnahmekamin, der in seinem unteren, dem Behälterboden nahen Endbereich eine flüssigkeitsdurchlässige Zone aufweist.

Die Erfindung bezieht sich insbesondere auf Flüssigkeitsbehälter, die als Reagenzflüssigkeitsgefäße in automatischen Analysegeräten verwendet werden. Bei dem Einsatz in einem solchen automatischen Analysegerät wird den Flüssigkeitsbehältern Reagenzflüssigkeit durch automatisches Pipettie-ren entnommen. Dies erfolgt bei moderneren Systemen in einem schnellen Takt, um einen hohen Durchsatz an betreffenden Analysevorgängen zu ermöglichen. Dabei werden die Flüssigkeitsbehälter mittels einer Transportvorrichtung z. B. in Gestalt eines Rotors rasch der Pipettierstation zugeführt und dort abgebremst, woraufhin die automatische Pipette oder Saugnadel durch die obere Öffnung des Flüssigkeitsbehälters hindurch in den Entnahmekamin eintaucht, um Flüssigkeit abzusaugen. Bei automatischen Analysegeräten für einen hohen Durchsatz stehen für jeden einzelnen Pipettiervorgang einschließlich des Positionierens des Flüssigkeitsbehälters in der Pipettierzone nur äußerst kurze Zykluszeiten von einzelnen Sekunden zur Verfügung. Dabei tritt das Problem auf, dass beim abrupten Abstoppen des Flüssigkeitsbehälters in der Pipettierzone die Flüssigkeit im Behälter schwappt und ggf. aufspritzt, so dass sich ein einigermaßen ausgeglichener Flüssigkeitspegel oft erst nach einer jeweiligen Wartezeit einstellt, die länger dauert als die geforderte kurze Pipettierzykluszeit für den Hochdurchsatzbetrieb. Das Pipettieren bei noch stark schwankendem Flüssigkeitspegel in dem Entnahmekamin soll üblicherweise vermieden werden, da hierbei die Pipettenspitze außen über einen relativ großen Bereich in unerwünschter Weise mit der Flüssigkeit benetzt wird und so ein vergleichsweise großes Mitreißvolumen an Flüssigkeit beim Zurückziehen der Pipette aus dem Flüssigkeitsbehälter außen an der Pipettenspitze hängen bleibt und dann bei weiteren Pipettiervorgängen Kontaminierungen verursacht. Um dies zu vermeiden, sollte die Pipettenspitze beim Pipettieren auch nur wenig in die zu pipettierende Flüssigkeit eintauchen und der Füllstand in dem Flüssigkeitsbehälter möglichst in Ruhe sein. Auch soll vermieden werden, dass die Pipette aufgrund eines schwankenden Flüssigkeitspegels Luft zieht. Ferner sollte Schaumbildung im Entnahmekamin unterdrückt sein. Diese Forderung lässt sich mit den bisher bekannten Flüssigkeitsbehältern der hier betrachteten Art normalerweise nur innerhalb von Zykluszeiten erfüllen, welche für den Hochdurchsatzbetrieb in automatischen Analysegeräten zu lange dauern.

Zum Stand der Technik von Reaktionsflüssigkeitsbehältem mit Entnahmekamin kann z. B. auf die WO 97/12677 A1, auf die US 5,102,631 oder auf die DE 38 38 278 C1 verwiesen werden. Bei dem Flüssigkeitsbehälter aus der WO 97/12677 A1 ist der rohrförmige Entnahmekamin an seinem oberen Ende mit einem radial nach außen abstehenden Flansch versehen, mit dem er an einer Tülle der Behälteröffnung hängend abgestützt ist. Dabei reicht das vollständig offene untere Ende des Entnahmekamins bis in die Nähe des Bodens des Flüssigkeitsbehälters, so dass durch die untere Öffnung des Entnahmekamins Flüssigkeitskommunikation zwischen dem Entnahmekamin und dem ihn umgehenden Innenraumbereich des Flüssigkeitsbehälters stattfinden kann. Damit beim Pipettieren Druckausgleich zwischen dem Innenraum des Behälters und der Umgebung stattfinden kann, sind in dem oberen Bereich des Entnahmekamins schlitzartige Wanddickenverminderungen vorgesehen, die ein Einströmen von Luft zwischen der Öffnungstülle des Flüssigkeitsbehälters und dem Mantel des Entnahmekamins ermöglichen sollen.

Ein Ausführungsbeispiel eines Behälters aus der DE 38 38 278 C1 hat einen Entnahmekamin, dessen Querschnitt wesentlich kleiner ist als der Querschnitt der oberen Behälteröffnung, wobei dieser Entnahmekamin einen mit der Öffnungstülle verschraubten Schraubdeckel durchsetzt und an diesem fixiert ist. Ein Durchgangsloch in dem Schraubdeckel erlaubt einen Druckausgleich zwischen dem Behälterinnenraum und der äußeren Umgebung. Der Entnahmekamin reicht bis in die Nähe des Behälterbodens, so dass Flüssigkeitsaustausch zwischen Entnahmekamin und dem ihn umgebenden Innenraum des Behälters durch die offene Unterseite des Entnahmekamins erfolgen kann. Bei einem weiteren Ausführungsbeispiel der DE 38 38 278 C1 sind der Außenumfang des Entnahmekamins an dessen oberem Ende und der Innenumfang der den Entnahmekamin an seinem oberen Ende umgebenden Tülle nur geringfügig unterschiedlich, so dass zwischen der Außenseite des Entnahmekamins und der Innenfläche der Tülle kein ausreichend großer Belüftungspfad für den Druckausgleich zwischen dem Behälterinneren und der Umgebung verbleibt. Für den Druckausgleich ist eine Durchgangsbohrung im Mantel des Entnahmekamins an dessen oberem Ende vorgesehen. Der Entnahmekamin ist an seinem unteren Ende im Wesentlichen vollständig offen, wobei Abstandshaltestege am unteren Ende des Entnahmekamins vorgesehen sind.

Der aus der US 5,102,631 bekannte Flüssigkeitsbehälter ist ähnlich dem zuletzt genannten Ausführungsbeispiel aus der DE 38 38 278 C1 aufgebaut und weist somit ebenfalls ein Durchgangsloch im Mantel des Entnahmekamins an dessen oberem Ende auf. Der Entnahmekamin reicht bis an den Boden des Flüssigkeitsbehälters, wobei jedoch große seitliche Öffnungen im Mantel des Entnahmekamins an dessen unterem Ende vorgesehen sind.

Die US 4,683,058 zeigt ein Filterröhrchen, welches in ein Zentrifugierröhrchen einsetzbar ist und dazu dient in einer Zentrifuge eine Mischung mit Hilfe der Zentrifugalkraft zu separieren. Das Filterröhrchen sitzt im oberen Bereich des Zentrifugierröhrchens, hat einen Filter an seinem unteren Ende und ist an seinem oberen Ende mit einem Deckel, welcher sich vom Zentrifugierröhrchen aus erstreckt, verschließbar. Die zu separierende Mischung wird in das Filterröhrchen eingebracht und das Filterröhrchen wird daraufhin verschlossen. Durch das sich im Zentrifugierröhrchen aufgrund der Zentrifugalkraft sammelnden Zentrifugat entsteht ein Überdruck im Innenraum des Zentrifugierröhrchens. Ein Druckausgleich zwischen dem Innenraum des Zentrifugierröhrchens und der Umgebung erfolgt mittels einer Kerbe, die in einem verdickten Abschnitt des Filterröhrchens gebildet ist.

Die US 2004/0157245 A1 offenbart eine verschließbare Trennvorrichtung zur Bearbeitung von Biomolekülen, die aus einem Sammelröhrchen und einer Trennsäule in Form eines mit einem Trennmaterial versehenen Röhrchens, das in den oberen Bereich des Sammelröhrchens eingebracht wird, besteht. Eine Flüssigkeit, die Biomoleküle enthält, wird in die Trennsäule eingebracht, woraufhin die Kombination aus Sammelröhrchen und Trennsäule verschlossen wird. Unter der Wirkung der Zentrifugalkraft in einer Zentrifuge sammelt sich die Flüssigkeit im Sammelgefäß, während die Biomoleküle in der Trennsäule verbleiben. Um den bei der Trennung entstehenden Druckunterschied zwischen dem Innenraum der Trennsäule und dem Innenraum des Sammelröhrchens auszugleichen, ist eine Durchgangsöffnung, die beide Innenräume verbindet und vorteilhaft mit einem Druckausgleichskanal, beispielsweise in Form einer Kerbe in der Mantelaußenwand der Trennsäule, in Verbindung steht, im oberen Bereich der Mantelwand der Trennsäule vorgesehen.

Versuche des Erfinders mit Flüssigkeitsbehältern mit Entnahmekamin aus dem Stand der Technik haben bestätigt, dass bei einem raschen Positionieren des Behälters in einer Behandlungszone ein Schwappen, Aufspritzen und ggf. Aufschäumen der Flüssigkeit im Behälter stattfindet und sich ein beruhigter, ausgeglichener Pegel im Entnahmekamin erst nach einer für Hochdurchsatz-Analysegeräte nicht tolerierbaren Zeit einstellt.

Der Erfindung liegt die Aufgabe zugrunde, einen Flüssigkeitsbehälter der eingangs genannten Art dahingehend zu verbessern, dass er in schnellen automatischen Pipettieranlagen im Hochdurchsatzbetrieb einsetzbar ist.Zur Lösung dieser Aufgabe wird erfindungsgemäβ vorgeschlagen, dass der Entnahmekamin im Bereich seines oberen Endes mit seinem Mantel der Umfangsbegrenzungsfläche der Behälteröffnung radial eng benachbart gegenüberliegt und in seinem unteren, dem Behälterboden nahen Endbereich eine flüssigkeitsdurchlässige Zone aufweist, wobei die Mantelwand des Entnahmekamins im Bereich seines oberen Endes zonenweise so verläuft, dass die gesamte Nantelwand Entnahmekamins in einer solchen Zone einen vergrößerten Abstand zu der Umfangsbegrenzungsfläche der Behälteröffnung hat, um einen Belüftungspfad in Form einer durch eine radiale Einbuchtung seiner gesamter Mantelwand gebildeten Belüftungsnut vorzusehen, der sich axial über den Bereich der Umfangsbegrenzungsfläche der Behälteröffnung hinaus nach unten erstreckt.

Ein solcher Belüftungspfad erlaubt einen schnellen und wirksamen Druckausgleich zwischen dem Inneren des Flüssigkeitsbehälters und der Umgebung und ist auf einfache Weise herzustellen. Dabei können Durchgangslöcher im Mantel des Entnahmekamins für Belüftungszwecke entfallen. Solche Durchgangslöcher erfordern bei betreffenden Flüssigkeitsbehältern aus dem Stand der Technik eine Begrenzung des maximalen Flüssigkeitspegels, wenn verhindert werden soll, dass schwappende Flüssigkeit durch die Durchgangsöffnung hindurch in den oberen Bereich des Entnahmekamins eindringen kann. Es sei darauf hingewiesen, dass dem Aspekt des Belüftungspfades auch selbständige Bedeutung zukommt, so dass er auch bei Entnahmekaminen Anwendung finden kann, die nicht mit einem Strömungswiderstandselement der vorstehend genannten Art ausgestattet sind, sondern z. B. mit einem Spalt herkömmlicher Art.

Weitertildend wird vorgeschlagen dass die flüssigkeitsdurchlässige Zone des Entnahmekamins wenigstens ein fein-poröses Strömungswiderstandselement aufweist, so dass Flüssigkeitsaustausch zwischen dem Entnahmekamin und dem ihn umgebenden Behälterinnenraum im Bereich der flüssigkeitszulässigen Zone nur über ein jeweiliges Strömungswiderstandselement erfolgen kann.

Das Strömungswiderstandselement dient als Strömungsbremse, die dafür sorgt, dass sich beim abrupten Abbremsen des Flüssigkeitsbehälters um den Entnahmekamin herum einsetzende Schwappbewegungen der Flüssigkeit erheblich gedämpft und verzögert als langsame Pegeländerungen im Entnahmekamin äußern. Das Strömungswiderstandselement bildet somit einen "Tiefpass" für die Flüssigkeit im Entnahmekamin, was die Frequenz und Heftigkeit der Schwappbewegungen bzw. Pegelstandshübe anbetrifft. Beim raschen Positionieren des Flüssigkeitsbehälters in einer Pipettierstation, z. B. mittels eines den Behälter tragenden Karussells oder Rotors kommt es nur zu relativ langsamen Pegeländerungen im Entnahmekamin, ungeachtet der durchs Abstoppen des Behälters ausgelösten Schwappbewegungen um den Entnahmekamin herum. Die Pipettierspitze einer betreffenden automatischen Pipettiereinrichtung kann somit unmittelbar nach dem Abstoppen des Behälters in den Entnahmekamin eingelassen werden und möglichst wenig tief in die Flüssigkeit eintauchen, um dann zu pipettieren. Die Eintauchtiefe oder der Pegel der Flüssigkeit im Entnahmekamin wird bei automatisierten Pipettierstationen üblicherweise sensorisch, z. B. mittels kapazitiver Sensoren erfasst und die Eintauchtiefe nach Maßgabe der Sensorinformationen gesteuert. Dies kann auch bei der Verwendung eines Flüssigkeitsbehälters nach der Erfindung in der entsprechenden Weise durchgeführt werden. Die Pipettierspitze wird dabei wunschgemäß nur über eine kleine Länge an ihrer Außenseite von der Flüssigkeit benetzt, so dass nur ein kleines Mitreißvolumen an Flüssigkeit an der Außenseite der Pipette sich ansammeln kann. Überraschende schnelle Pegeländerungen der Flüssigkeit im Entnahmekamin aufgrund des äußeren Schwappeffektes sind während der kurzen Pipettierzeit aufgrund des Tiefpasseffektes des Strömungswiderstandselements nicht zu erwarten. Der Pegel der Flüssigkeit im Entnahmekamin schwankt somit allenfalls langsam und in gedämpftem Maße, so dass die automatische Pipettiereinrichtung zuverlässig aus dem jeweils kalkulierten Füllstand im Entnahmekamin mit geringer Eintauchtiefe der Pipettenspitze pipettieren kann.

Das Strömungswiderstandselement kann ferner so ausgestaltet werden, dass es als Schaumbremse wirkt, die den Durchtritt von Schaum aus dem Behälterinnenraum in den Entnahmekamin weitgehend unterbindet.

Das Strömungswiderstandselement ist vorzugsweise aus einem Vliesstoff, insbesondere Filz, oder/und einem Fasergewebe oder/und einem gesinterten Kunststoffmaterial, insbesondere Polyethylen oder Propypropylen, oder/ und aus einem offenporigen Schaum gebildet.

Gemäß einer bevorzugten Ausführungsform der Erfindung weist der Entnahmekamin an seinem unteren Ende eine stirnseitige Rohröffnung auf, die allerdings mit dem Strömungswiderstandselement ausgefüllt ist. Dabei ist es gemäß einer Weiterbildung der Erfindung vorgesehen, dass das Strömungswiderstandselement aus der unteren stirnseitigen Öffnung des Entnahmekamins heraus nach unten absteht und somit als Abstandshalteelement zwischen dem Behälterboden und der stirnseitigen Öffnung des Entnahmekamins dienen kann. Eine solche Lösung ist u. a. mit einem Strömungswiderstandselement in Form eines Filterelementes aus gesintertem Polyethylen realisierbar, welches in der unteren Entnahmekaminöffnung eingesteckt und fixiert ist.

Gemäß einer Ausführungsform der Erfindung ist das Strömungswiderstandselement ein feinporiges Gittersieb aus Metall oder Kunststoff. Alternativ oder zusätzlich kann es vorgesehen sein, dass der Entnahmekamin mit einer Vielzahl kapillarer Durchgangsbohrungen an seinem unteren Ende präpariert ist und dass der so fein perforierte Bereich des Entnahmekamins das Strömungswiderstandselement bildet. Bei den diversen Möglichkeiten der Realisierung des Strömungswiderstandselements ist stets darauf zu achten, dass es die gewünschte Strömungsbremseigenschaft bietet und sich Schwappbewegungen der Flüssigkeit nur als vergleichsweise langsame und gedämpfte Pegeländerungen im Entnahmekamin auswirken können.

Vorzugsweise ist der Entnahmekamin ein Bauteil aus Kunststoff, welches beim Präparieren des Flüssigkeitsbehälters in den Flüssigkeitsbehälter durch dessen Öffnung hindurch einsetzbar ist.

Wie an sich bekannt, wird vorgeschlagen, dass der Behälter an seiner oberen Öffnung eine nach oben abstehende Tülle, insbesondere Schraubverschluss-Tülle aufweist, deren Innenfläche die Umfangsbegrenzungsfläche der Behälteröffnung bildet. Der Entnahmekamin kann an seinem oberen Ende einen Flanschabschnitt aufweisen, mit dem er an einer nach oben weisenden Schulterfläche der Tülle angehängt ist. Der Entnahmekamin kann dementsprechend stabil in seiner Einbaulage im Behälter gehalten sein.

Die Erfindung wird unter Bezugnahme auf die Figuren näher erläutert.
- Fig. 1: zeigt in einer Schnittseitenansicht ein Ausführungsbeispiel eines Flüssigkeitsbehälters nach der Erfindung mit Entnah- mekamin und Strömungswiderstandselement in der unteren Entnahmekaminöffnung.
- Fig. 2: zeigt den Entnahmekamin aus Fig. 1 separat in perspektivi- scher Darstellung.
- Fig. 3: zeigt ein weiteres Ausführungsbeispiel eines Entnahmeka- mins für einen Flüssigkeitsbehälter nach der Erfindung in perspektivischer Darstellung.

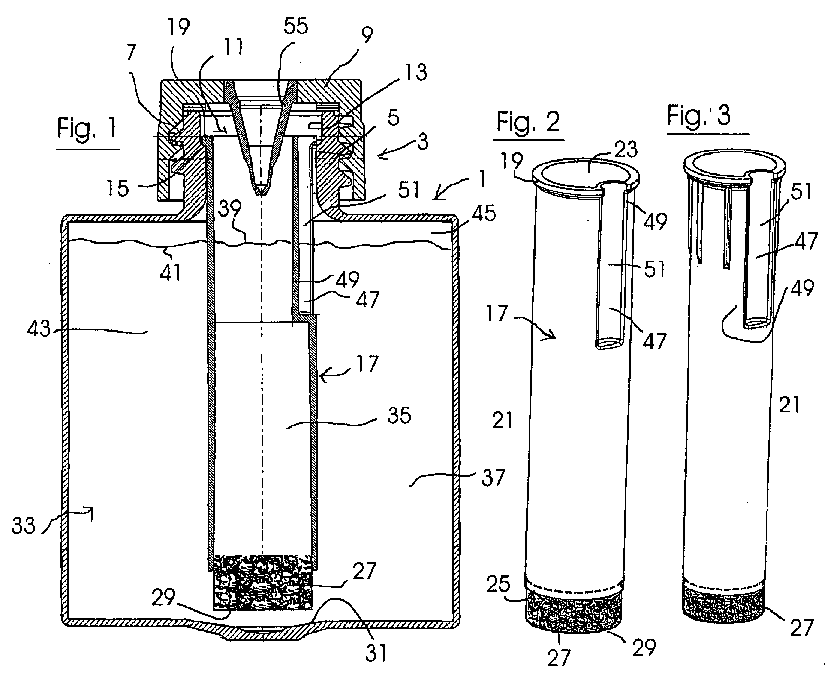

In Fig. 1 ist ein Ausführungsbeispiel eines Flüssigkeitsbehälters 1 nach der Erfindung im Längsschnitt längs einer vertikalen Mittenebene dargestellt. Der Flüssigkeitsbehälter 1 ist eine Flasche mit Schraubverschluss 3. Der Flaschenhals 5 ist eine Schraubverschluss-Tülle mit Außengewinde 7, das als Schraubgewinde für den Überwurf-Schraubdeckel 9 dient. Der tüllenartige Flaschenhals 5 weist die Entnahmeöffnung 11 des Flüssigkeitsbehälters 1 auf und hat an seiner Innenfläche 13 einen Absatz mit einer radial nach innen verlaufenden Ringschulter 15, an welcher ein Entnahmekamin 17 mit einem oberen Endflansch 19 angehängt ist.

Der Entnahmekamin 17 ist in Fig. 2 in perspektivischer Darstellung separat gezeigt. Er umfasst im Beispielsfall einen von der Grundform her hohlzylindrischen Rohrkörper 21, der an seinen stirnseiten Enden Rohröffnungen 23, 25 hat. Die untere Rohröffnung 25 des Rohrkörpers 21 ist mit einem fein-porösen Strömungswiderstandselement 27 ausgefüllt, bei dem es sich um einen flüssigkeitsdurchlässigen Pfropf aus gesintertem Polyethylen handelt. Zur Bildung des Strömungswiderstandselements 27 kommen jedoch auch andere Materialien in Frage, z. B. Filz, Fasergewebe oder offenporiger Schaumstoff. In dem Beispielsfall gemäß Fig. 1 und Fig. 2 steht das Strömungswiderstandselement 27 über den unteren Rand des Rohrkörpers 21 nach unten hin ab, so dass es als Abstandshalterelement dienen kann. Diese Funktion wird bei dem Flüssigkeitsbehälter 1 in Fig. 1 nicht genutzt, da der Entnahmekamin 17 so in den Flüssigkeitsbehälter 1 eingehängt ist, dass das untere Ende 29 einen - wenn auch geringen - Abstand zu dem Boden 31 des Flüssigkeitsbehälters 1 hat.

Der Entnahmekamin 17 gemäß Fig. 2 kann jedoch aufgrund der Abstandshaltefunktion des Strömungswiderstandselements 27 auch in Flüssigkeitsbehältern verwendet werden, bei denen er auf dem Behälterboden aufsteht.

Gemäß Fig. 1 taucht der Entnahmekamin 17 bei dem gezeigten Ausführungsbeispiel bis nahe an den Behälterboden 31 in den Behälterinnenraum 33 ein, so dass zwischen dem Innenraum 35 des Entnahmekamins 17 und dem ihn umgebenden Ringraum 37 im Inneren des Behälters 1 Flüssigkeitskommunikation nur durch das fein-poröse Strömungswiderstandselement 27 erfolgen kann. In Fig. 1 ist der Flüssigkeitsbehälter 1 in einem Ruhezustand dargestellt, in dem der schematisch angedeutete Flüssigkeitspegel 39 in dem Entnahmekamin 17 dem Flüssigkeitspegel 41 im übrigen Behälterraum 37 entspricht.

Bei Beschleunigungs- und Verzögerungsvorgängen, wie sie beim raschen Weitertransport und beim abrupten Positionieren des Flüssigkeitsbehälters in einer Pipettierstation stattfinden, gerät die Flüssigkeit 43 jedoch in Bewegung, so dass sie eine Tendenz zum Schwappen, Aufspritzen und ggf. Schäumen zeigt. Diese Tendenz ist in dem größeren Ringraumbereich 37 des Behälters 1 erheblich stärker ausgebildet als in dem Entnahmekamin 17 mit seinem deutlich kleineren Volumen. Das Strömungswiderstandselement 27 sorgt dafür, dass sich heftige Flüssigkeitsbewegungen in dem Ringraum 37 nicht unmittelbar auf die Flüssigkeit im Entnahmekamin übertragen, sondern gedämpft und verzögert auftreten, so dass der Pegel 39 auch nach raschem Positionieren des Flüssigkeitsbehälters 1 in einer Pipettierstation nur vergleichsweise langsam schwankt. Dies kann bei der Steuerung des dann erfolgenden Pipettiervorgangs berücksichtigt werden. Der Pipettiervorgang kann dann so ablaufen, dass die durch die Behälteröffnung 11 in den Entnahmekamin 17 nach Entfernen des Deckels 9 hinabgelassene Pipettierspitze (nicht gezeigt) nur um ein geringes Maß in die Flüssigkeit 43 eintaucht. Das Pipettieren der beruhigten Flüssigkeit 43 im Entnahmekamin kann somit in einer sehr kurzen Zykluszeit von z. B. weniger als drei oder gar weniger als zwei Sekunden erfolgen.

Bei solchen schnell ablaufenden Pipettiervorgängen besteht neben der Beruhigung des Flüssigkeitspegels 39 im Entnahmekamin 17 noch ein weiteres Problem. Dieses weitere Problem betrifft die Belüftung des Raumbereiches 45 oberhalb des Flüssigkeitsspiegels 41 beim Pipettieren.

Vorausgegangene Untersuchungen des Erfinders mit Entnahmekaminkonstruktionen, wie sie aus dem Stand der Technik bekannt waren und oben angesprochen sind, haben gezeigt, dass die damit realisierbaren Belüftungskanäle zu klein waren, um einen hinreichend raschen Druckausgleich zwischen dem Außenraum des Behälters und dem Raumbereich 45 im Hochdurchsatzbetrieb gewährleisten zu können. Eine hinreichend schnelle Belüftung wurde mit einer Entnahmekaminvariante erzielt, bei der oberhalb des Flüssigkeitspegels 41 ein recht großes Fenster in dem Entnahmekamin vorgesehen war. Eine derartige Lösung sollte jedoch erfindungsgemäß vermieden werden, da ein solches Fenster im oberen Behälterbereich Platz benötigt und daher den maximalen Füllstand des Flüssigkeitsbehälters begrenzt. Darüber hinaus besteht die Gefahr des Einschwappens von Flüssigkeit 43 aus dem Ringraum 37 in den Innenraum des Entnahmekamins 17 durch das Fenster hindurch, so dass dann die Gefahr besteht, dass die während des Pipettiervorgangs in den Entnahmekamin 17 eingebrachte Pipettierspitze über einen großen Bereich mit der einschwappenden Flüssigkeit benetzt wird.

Gemäß einem erfindungsgemäßen Aspekt, dem selbständige Bedeutung zukommt und der somit auch bei Entnahmekaminen ohne Strömungswiderstandselement der vorstehend erläuterten Art anwendbar ist, weist der Entnahmekamin 17 im Bereich seines oberen Endes eine durch eine radiale Einbuchtung 47 seiner Mantelwand 49 gebildete Belüftungsnut 51 auf, die sich axial über den Bereich der Umfangsbegrenzungsfläche 13 der Behälteröffnung 11, d.h. über den Bereich der Tülle 5 hinaus nach unten erstreckt, so dass sie einen hinreichend großen und langen Belüftungspfad entlang der Tülleninnenseite 13 bieten kann. Eine solche radiale Einbuchtung 47 der Mantelwand 49 des Entnahmekamins 17 ist auf einfache Weise herstellbar. Insbesondere, aber nicht vorzugsweise können mehrere solcher durch radiale Einbuchtungen gebildeter Belüftungsnuten 51 vorgesehen sein. Radiale Einbuchtung bedeutet in der hier verwendeten Terminologie, dass die Mantelwand 49 im Belüftungsnutbereich nicht einfach nur in ihrer Dicke vermindert ist, sondern dass der Verlauf der Mantelwand im Querschnitt betrachtet eine radial nach innen vorstehende Einbuchtung beschreibt. Auf diese Weise kann die Belüftungsnut vergleichsweise groß gestaltet werden, ohne die Stabilität des Entnahmekamins zu beeinträchtigen. Zur Bildung eines Belüftungspfades kann es aber z. B. auch vorgesehen sein, dass die Mantelwand 49 in einer betreffenden Zone vergrößerten Abstandes zur Umfangsbegrenzungsfläche 13 der Behälteröffnung 11 einen kreissehnenförmigen Verlauf aufweist.

Bei dem wie vorstehend erläutert realisierten Belüftungskonzept ist es daher nicht erforderlich, die Mantelwand 49 des Entnahmekamins 17 mit Belüftungsfenstem im oberen Bereich zu perforieren. Der maximale Flüssigkeitsfüllstand in dem Flüssigkeitsbehälter nach der Erfindung wird somit nicht durch Belüftungsmaßnahmen beschränkt. Auch kann im oberen Bereich des Entnahmekamins 17 keine Flüssigkeit von dem Ringraum 37 in den Innenraum 35 des Entnahmekamins 17 gelangen. Versuche haben gezeigt, dass durch optimale Orientierung der Belüftungsnut 51 im Behälter 1 relativ zu dessen Wänden und unter Berücksichtigung von Behälterbewegungszuständen einer Tendenz der Behälterflüssigkeit zum Herausspritzen oder Herauskriechen durch die Belüftungsnut bei Beschleunigungen des Behälters entgegengewirkt werden kann.

Fig. 3 zeigt eine abgewandelte Ausführungsform des Entnahmekamins 17 aus Fig. 1. Der Rohrkörper 21 des Entnahmekamins in Fig. 3 hat einen geringeren Außendurchmesser als der Rohrkörper in Fig. 1. Zum Ausgleich sind im oberen Bereich des Entnahmekamins 17 in Fig. 3 axial verlaufende Distanzrippen 53 außen an der Zylindermantelwand vorgesehen, welche im Einbauzustand im Flüssigkeitsbehälter der Innenfläche der Schraubverschluss-Tülle eng benachbart gegenüberliegen und somit für einen stabileren Halt des Entnahmekamins sorgen.

Pipettiervorgänge mit dem Flüssigkeitsbehälter nach der Erfindung erfolgen üblicherweise bei abgenommenem Verschlussdeckel 9. Insbesondere für Pipettiervorgänge, die langsam ablaufen dürfen, weist der Verschlussdeckel 9 einen Führungstrichter 55 auf, der bei aufgesetztem Verschlussdeckel 9 von der Pipettenspitze beim Eindringen in den Behälter 1 durchstochen werden kann.

Der Behälter 1 gemäß Fig. 1 kann ggf. mit weiteren Behältern in einer gemeinsamen Handhabungskassette (nicht gezeigt) untergebracht sein, in der er verschiedene Stationen in einem automatischen Analysegerät durchlaufen kann.

Abweichend von dem gezeigten Ausführungsbeispiel kann ein Flüssigkeitsbehälter nach der Erfindung auch als Zweikammerbehälter oder Mehrkammerbehälter mit mehreren Entnahmekaminen der vorstehend erläuterten Art ausgebildet sein.

## Patentansprüche

1. Flüssigkeitsbehälter mit einer oberen Öffnung (11) und mit einem in Flucht zu der Öffnung (11) in den Behälter (1) hineinreichenden rohrartigen Entnahmekamin (17), der im Bereich seines oberen Endes mit seinem Außenumfang der Umfangsbegrenzungsfläche (13) der Behälteröffnung (11) radial eng benachbart gegenüberliegt und in seinem unteren, dem Behälterboden (31) nahen Endbereich eine flüssigkeitsdurchlässige Zone (25, 27) aufweist, **dadurch gekennzeichnet, dass** die Mantetwand (49) des Entnahmekamins (17) im Bereich seines oberen Endes zonenweise so verläuft, dass die gesamte Nantetwand des
Entnahmekamins (17) in einer solchen Zone (47) einen vergrößerten Abstand zu der Umfangsbegrenzungsfläche (13) der Behälteröffnung (11) hat, um einen Belüftungspfad in Form einer durch eine radiale nach innen vorstehende Einbuchtung (47) seiner gesamter Mantelwand (49) gebildeten Belüftungsnut (51) vorzusehen, die sich axial über den Bereich der Umfangsbegrenzungsfläche (13) der Behälteröffnung (11) hinaus nach unten erstreckt.

2. Flüssigkeitsbehälter nach Anspruch 1, **dadurch gekennzeichnet, dass** der Behälter (1) an seiner oberen Öffnung eine nach oben abstehende Tülle (5), insbesondere Schraubverschluss-Tülle, aufweist, deren Innenfläche (13) die Umfangsbegrenzungstläche der Behälteröffnung (11) bildet.

3. Flüssigkeitsbehälter nach Anspruch 2, **dadurch gekennzeichnet, dass** der Entnahmekamin (17) an seinem oberen Ende einen Flanschabschnitt (19) aufweist, mit dem er an einer nach oben weisenden Schulterfläche (15) der Tülle (5) angehängt ist.

4. Flüssigkeitsbehälter nach Anspruch 3, **dadurch gekennzeichnet, dass** die nach oben weisende Schulterfläche (15) der Tülle durch einen Absatz in der Innenfläche (13) der Tülle (5) gebildet ist.

5. Flüssigkeitsbehälter nach einem der vorhergehenden Ansprüche,
**dadurch gekennzeichnet, dass** die flüssigkeitsdurchlässige Zone (25, 27) wenigstens ein fein-poröses Strömungswiderstandselement (27) aufweist, so dass Flüssigkeitsaustausch zwischen dem Entnahmekamin (17) und dem ihn umgebenden Behälterinnenraum (37) im Bereich der flüssigkeitsdurchlässigen Zone (25, 27) nur über ein jeweiliges Strömungswiderstandselement (27) erfolgen kann.

6. Flüssigkeitsbehälter nach Anspruch 5, **dadurch gekennzeichnet, dass** das Strömungswiderstandselement (27) aus einem
- Vliesstoff, insbesondere Filz, oder/und
- einem Fasergewebe oder/und
- einem gesintertem Kunststoffmaterial, insbesondere Polyethylen oder Polypropylen, oder/und
- einem offenporigen Schaum gebildet ist.

7. Flüssigkeitsbehälter nach Anspruch 5, **dadurch gekennzeichnet, dass** das Strömungswiderstandselement ein feinporiges Gittersieb oder ein unterer Wandabschnitt des Entnahmekamins mit einer Vielzahl kapillarer Durchgangsbohrungen ist.

8. Flüssigkeitsbehälter nach einem der vorhergehenden Ansprüche 5 bis 7, **dadurch gekennzeichnet, dass** der Entnahmekamin (17) an seinem unteren stirnseitigen Ende eine Öffnung (25) aufweist, die mit dem Strömungswiderstandselement (27) ausgefüllt ist.

9. Flüssigkeitsbehälter nach Anspruch 8, **dadurch gekennzeichnet, dass** das Strömungswiderstandselement (27) aus der Öffnung (25) des Entnahmekamins (17) heraus nach unten absteht.

10. Flüssigkeitsbehälter nach einem der vorhergehenden Ansprüche, **dadurch gekennzeichnet, dass** der Entnahmekamin (17) ein in den Flüssigkeitsbehälter (1) durch dessen Öffnung (11) hindurch einsetzbares Rohrelement (21) umfasst.

## Claims

1. A liquid container with an upper opening (11) and with a tubular withdrawal chimney (17) which extends into the container (1) flush with the opening (11) and which in the region of its upper end is situated radially closely adjacent and opposed to with its outer periphery the peripheral boundary surface (13) of the container opening (11), and in its lower end portion near the container bottom (31) it has a liquid-permeable zone (25,27), **characterised in that** in the vicinity of its upper end the circumferential wall (49) of the withdrawal chimney (17) extends in zones so that the entire circumferential wall of the withdrawal chimney (17) has in such a zone (47) an increased distance from the peripheral boundary surface (13) of the container opening (11) so as to provide a venting path in the form a venting groove (51) which is formed by a radial inwardly projecting recess(47) of its entire circumferential wall (49) and which extends axially downwards beyond the region of the peripheral boundary surface (13) of the container opening (11).

2. A liquid container according to Claim 1, **characterised in that** in its upper opening the container (1) has an upwardly projecting grommet (5), in particular a screw closure grommet, the inner surface (13) of which forms the peripheral boundary surface of the container opening (11).

3. A liquid container according to Claim 2, **characterised in that** at its upper end the withdrawal chimney (17) has a flanged portion (19) with which it is suspended from an upwardly facing shoulder surface (15) of the grommet (5).

4. A liquid container according to Claim 3, **characterised in that** the upwardly facing shoulder surface (15) of the grommet is formed by a ledge in the inner surface (13) of the grommet (5).

5. A liquid container according to any one of the preceding Claims, **characterised in that** the liquid-permeable zone (25,27) has at least one fine-pored flow resistance element (27) so that liquid exchange between the withdrawal chimney (17) and the container interior (37) surrounding it in the vicinity of the liquid-permeable zone (25,27) can take place only via a respective flow resistance element (27).

6. A liquid container according to Claim 5, **characterised in that** the flow resistance element (27) is formed from a
- a non-woven fabric, in particular felt, and/or
- a fabric cloth, and/or
- a sintered plastics material, in particular polyethylene or polypropylene, and/or
- an open-pored foam.

7. A liquid container according to Claim 5, **characterised in that** the flow resistance element is a fine-pored grating sieve or a lower wall section of the withdrawal chimney with a plurality of capillary through-bores.

8. A liquid container according to any one of the preceding Claims 5 to 7, **characterised in that** at its lower end-face end the withdrawal chimney (17) has an opening (25) which is filled with the flow resistance element (27).

9. A liquid container according to Claim 8, **characterised in that** the flow resistance element (27) projects downwards out of the opening (25) of the withdrawal chimney (17).

10. A liquid container according to any one of the preceding Claims, **characterised in that** the withdrawal chimney (17) comprises a tube element (21) which can be inserted into the liquid container (1) through its opening (11).

## Revendications

1. Récipient de liquide avec une ouverture supérieure (11) et avec une cheminée d'évacuation (17) tubulaire parvenant en alignement avec l'ouverture (11) dans le récipient (1), laquelle fait face radialement de manière étroitement contigüe dans la zone de son extrémité supérieure avec sa périphérie extérieure à la surface de délimitation périphérique (13) de l'ouverture de récipient (11) et présente dans sa zone d'extrémité inférieure proche du fond de récipient (31), une zone perméable au liquide (25, 27), **caractérisé en ce que** la paroi d'enveloppe (49) de la cheminée d'évacuation (17) s'étend par zone dans la zone de son extrémité supérieure de sorte que la paroi d'enveloppe entière de la chemine d'évacuation (17) présente dans une telle zone (47) une distance augmentée par rapport à la surface de délimitation périphérique (13) de l'ouverture de récipient (11) afin de prévoir une voie d'aération sous la forme d'une rainure d'aération (51) formée par un creux (47) radial dépassant vers l'intérieur de sa paroi d'enveloppe entière (49), laquelle s'étend axialement sur la zone de la surface de délimitation périphérique (13) de l'ouverture de récipient (11) vers le bas.

2. Récipient de liquide selon la revendication 1, **caractérisé en ce que** le récipient (1) présente sur son ouverture supérieure, un bec verseur (5) s'éloignant vers le haut, en particulier un bec verseur à fermeture à vis, dont la surface intérieure (13) forme la surface de délimitation périphérique de l'ouverture de récipient (11).

3. Récipient de liquide selon la revendication 2, **caractérisé en ce que** la cheminée d'évacuation (17) présente sur son extrémité supérieure, une section bridée (19) avec laquelle il est suspendu à une surface d'épaulement (15) du bec verseur (15) dirigée vers le haut.

4. Récipient de liquide selon la revendication 3, **caractérisé en ce que** la surface d'épaulement (15) dirigée vers le haut du bec verseur est formée par un gradin dans la surface intérieure (13) du bec verseur (5).

5. Récipient de liquide selon l'une quelconque des revendications précédentes, **caractérisé en ce que** la zone perméable au liquide (25, 27) présente au moins un élément de résistance à l'écoulement (27) à micropores de sorte que l'échange de liquide entre la cheminée d'évacuation (17) et l'espace intérieur de récipient (37) l'entourant dans la région de la zone perméable au liquide (25, 27) ne puisse être effectué que par un élément correspondant de résistance à l'écoulement respectif (27).

6. Récipient de liquide selon la revendication 5, **caractérisé en ce que** l'élément de résistance à l'écoulement (27) est formé d'un
- non tissé, en particulier de feutre et/ou
- d'un tissu en fibres et/ou
- d'un matériau plastique fritté, en particulier du polyéthylène ou du polypropylène et/ou
- d'une mousse à pores ouverts.

7. Récipient de liquide selon la revendication 5, **caractérisé en ce que** l'élément de résistance à l'écoulement est un tamis à grille à micropores ou une section de paroi inférieure de la cheminée d'évacuation avec une pluralité de perçages traversants capillaires.

8. Récipient de liquide selon l'une quelconque des revendications 5 à 7, **caractérisé en ce que** la cheminée d'évacuation (17) présente sur son extrémité inférieure côté avant, une ouverture (25) qui est remplie avec l'élément de résistance à l'écoulement (27).

9. Récipient de liquide selon la revendication 8, **caractérisé en ce que** l'élément de résistance à l'écoulement (27) est éloigné vers le bas de l'ouverture (25) de la cheminée d'évacuation (17).

10. Récipient de liquide selon l'une quelconque des revendications précédentes, **caractérisé en ce que** la cheminée d'évacuation (17) comporte un élément tubulaire (21) pouvant être inséré dans le récipient de liquide (1) par son ouverture (11).
